# EUROPEAN PATENT SPECIFICATION

(11) **EP 3 441 793 B1**
(45) Date of publication and mention of the grant of the patent: **26.03.2025**
(21) Application number: 17779141.5
(22) Date of filing: 04.04.2017
(51) Int. Cl.: G01T 3/06, G01T 1/20, G21K 4/00

(54) **SCINTILLATOR ARRAY**
SZINTILLATORARRAY
RÉSEAU DE SCINTILLATEURS

(30) Priority: 06.04.2016 JP 2016076704
(43) Date of publication of application: 13.02.2019
(73) Proprietor: Kabushiki Kaisha Toshiba, Minato-ku Tokyo 105-8001 (JP); Toshiba Materials Co., Ltd., Yokohama-shi, Kanagawa 235-8522 (JP)
(72) Inventor: FUKUTA, Yukihiro, Tokyo 105-8001 (JP); ADACHI, Yoshitaka, Tokyo 105-8001 (JP); NAKASHIMA, Nobuaki, Tokyo 105-8001 (JP); NITTOH, Koichi, Tokyo 105-8001 (JP)
(74) Representative: Henkel & Partner mbB
(86) International application number: PCT/JP2017/014095
(87) International publication number: WO 2017/175763

(56) References cited:
- WO-A1-2011/012154
- WO-A1-2013/116241
- WO-A1-2014/188458
- WO-A1-2015/166999
- JP-A- 2010 181 412
- JP-A- 2012 225 680
- JP-A- 2012 225 680
- JP-A- 2013 500 480
- US-B2- 9 029 788

## Description

### FIELD

Embodiments of the present invention relate to a scintillator array.

### BACKGROUND

Conventionally, there have been proposed various neutron detectors (neutron two-dimensional detectors) used for neutron radiography, neutron imaging, neutron scattering experiments, and the like. At present, in countries throughout the world, for basic experiments related to physical property research and atomic nuclei of various substances, construction of new high-intensity pulsed neutron sources is in progress.

As a commonly-used neutron detector, there have been known a He-3 gas detector using ³He (also referred to as He-3) gas which is an isotope of He (helium) and having high detection efficiency and a scintillation detector using a scintillator which reacts with neutrons directly or secondarily to emit light.

Since a neutron has no electric charge, a converter which reacts with neutrons to convert them into charged particles, gamma rays, or the like is required in order to detect the neutrons. As the neutron converter, there is known a neutron converter using ³He, ⁶Li (also referred to as Li-6), ¹⁰B (also referred to as B-10), ¹¹³Cd (Cd-113), ¹⁵⁵Gd (also referred to as Gd-155), ¹⁵⁷Gd (also referred to as Gd-157) or the like having a large neutron absorption cross section, but at present, a He-3 gas detector which is a neutron detector using He-3 gas is used because of low sensitivity to gamma rays. In order to efficiently detect fast neutrons and epithermal neutrons having high energy, there also has been studied a structure in which the surroundings of a neutron detector is covered with a neutron moderator such as polyethylene.

Though the scintillation detector has a high counting capacity, density is high and sensitivity to gamma rays is high because of being a solid body. In order to detect neutrons at a high counting rate, it is essential to use a neutron detection scintillator having a short fluorescence lifetime. Therefore, a neutron detector using a scintillator constituted with a Li₂B₄O₇ single crystal for neutron detection and having a combination of its fluorescent property and a photomultiplier tube is under development. In order to reduce influence of gamma rays which is essential for neutron detection or neutron imaging, a scintillator constituted with a light element is preferable. Since Li, B, and O are each the light element, the scintillator constituted with the Li₂B₄O₇ single crystal satisfies the aforementioned demand.

As an example of a neutron scintillator, a neutron scintillator which is thinner compared with a conventional neutron scintillator and is more excellent in terms of gamma-ray sensitivity and position resolution compared with a conventional Li-based scintillator is under development. This can be produced by, using glass formed by adding Ce to an oxide containing B and Li as main components as a starting raw material, mixing Li₂B₄O₇ and CeO₂, thereafter heating the mixture at a temperature of at least 950°C or more and holding it for one hour or longer, and thereafter cooling it at a rate of 150°C/sec or more between temperatures of 800 and 400°C.

In LiBO₃ and Li₂B₄O₇ compounds constituted with only light elements estimated to have low gamma-ray sensitivity, light emission by neutrons is very small. In single crystals obtained by adding Ce to these, an amount of Ce solid-dissolving in the crystals is very small, the light emission by neutrons is small, and it is difficult to use them as a two-dimensional detector for neutron imaging or for neutron radiography.

As for Li and B, scintillator materials can be selected regardless of the gamma-ray sensitivity because a several MeV charged particle production reaction is used for the neutron detection. In particular, since B can be expected to have neutron detection efficiency about four times of that of the same amount of Li, it is possible to produce a thinner scintillator. This scintillator, since being very advantageous in terms of the gamma-ray sensitivity and the position resolution, is an ideal neutron converter. However, B has about half charged particle energy to be produced of that of commercially available Li glass (Li-Glass) and is considered disadvantageous in terms of light emission output, and in most of the conventional neutron scintillators, Li is used as a converter.

As a representative neutron scintillator which is practically used currently, for example, a neutron scintillator using LiF/ZnS can be cited. This neutron scintillator has a high light emission amount and is also excellent in handleability, but is opaque and is limited in detection efficiency and counting capacity.

A resolution when high-definition imaging is performed depends on a spread in emitting light by putting a reactant and a scintillator together or on a resolution of an optical system or an image sensor which images the light. Recently, the number of charge coupled device (CCD) elements or complementary metal oxide semiconductor (CMOS) elements used for an imaging system has been increasing dramatically, and therefore configurations of a reaction film and a scintillator are considered to mainly determine the resolution. That is, when a reaction with neutrons in the reaction film generates charged particles and the charged particles and the scintillator react with each other to emit light, a flying distance (range) of the charged particles and a diffusion length of light emitted in the scintillator are one of causes to determine presence/absence of blurring related to the resolution.

In order to improve the resolution, it is necessary to make the reaction film thin and shorten a range of secondary charged particles to be generated. In a case of LiF/ZnS, Li reacts with neutrons to emit alpha (α) rays, and the α rays make a ZnS phosphor emit light. An actual configuration, in which LiF/ZnS is granular powder, is a configuration in which the LiF/ZnS powder is applied on an Al plate being a substrate and bound by an organic binder, in many cases.

As Li which reacts with neutrons, Li-6 is normally used in order to increase reaction efficiency, but due to lowness of an atom density in relation to the whole including the binder or the like, an applied thickness is about several hundreds µm. Therefore, the resolution, which is determined by the applied thickness, is not high. When energy of neutrons in particular increases, a rate of reaction with Li-6 decreases further, and efficiency also becomes poor. Making the thickness larger is considered in order to increase the rate of reaction, but since LiF/ZnS is opaque and emitted light scatters in LiF/ZnS and is not transmitted, the efficiency does not increase even though the thickness is made larger.

As a method of solving the above, there has been proposed a two-dimensional detector in which a neutron detector is constituted with a capillary plate having a plurality of openings passing through in a thickness direction and filled with a liquid scintillator which reacts with neutrons in the plurality of these openings and an imaging detector, and which measures scintillation light. However, since the capillary plate portion does not react and the neutrons pass through this portion, a high-definition and high-efficiency two-dimensional detector is not obtained. It is also difficult, also from a manufacturing viewpoint, to hold the scintillator uniformly in all holes of the capillary plate, so that it is not practically used yet.

Meanwhile, an imaging intensifier (or electron multiplier) which is obtained by combining a reaction film and a scintillator, converts light of the scintillator into electrons by using a photoelectric conversion film, and amplifies the electrons is also under development in order to achieve high definition and increase sensitivity. However, in this structure, a thickness of the reaction film is only about 5 µm for the purpose of high definition, and reaction efficiency with neutrons is about 10% in a case of B-10, and remaining 90% of the neutrons is transmitted and is not used. Furthermore, when energy of neutrons increases, the reaction efficiency decreases further. Therefore, the reaction efficiency is poor though definition is high, and when the number of generated neutrons is small (flux is small), it is necessary to perform integration over time.

As described above, for the purpose of achieving highly defined and highly sensitive imaging in a non-destructive manner by way of transmitting conditions of substances and the inside of a structure by using neutrons to thereby detect scattered neutrons two-dimensionally, it is desired to develop a neutron detector capable of detecting high energy neutrons with high definition and high efficiency in particular.

JP 2012 225 680 A discloses to provide a neutron detector capable of detecting neutrons with high-precision and high efficiency with respect to wide energy of a neutron, especially with respect to high energy thereof. This neutron detector includes: a multi-stage laminated layer structure laminated with multiple stages of laminated layer structures; and a detecting section constituted so as to guide light generated by a scintillator layer outside by transmitting the light through the scintillator layer while reflecting the light by a metal film and a second vapor deposition film. Each of the laminated layer structures includes: the metal film that extends in an incident direction of a neutron and has a function as a reflecting layer for reflecting light; a first vapor deposition film that is formed on the metal film, extends in the incident direction of the neutron, reacts with neutrons and emits radioactive rays; the second vapor deposition film that extends in the incident direction of the neutron, is arranged adjacent to the first vapor deposition film and is composed of a reflecting material for reflecting light; and the scintillator layer that extends in the incident direction of the neutron, is arranged adjacent to the second vapor deposition film and generates the light from the radioactive rays generated by the first vapor deposition film.

US 9 029 788 B2 provides a fast-neutron detector, comprising: a plastic scintillator array which includes at least one plastic scintillator unit, wherein sidewall surfaces of each plastic scintillator unit are covered or coated with a neutron-sensitive coating film. The fast-neutron detector based on such film-coated plastic scintillators according to the present invention advantageously addresses the mutual competition problem between a moderated volume and a measured volume and can obtain a high fast-neutron detecting efficiency.

WO 2014 188 458 A1 discloses a method for producing thermal-neutron detectors that do not make use of 3He, wherein it envisages the following steps: I) producing neutron converters by deposition of thin films of 6LiF on various solid substrates, such as glass, plastic, silicon, scintillating materials, such as CsI and the like; II) coupling one or more thin layers of the neutron converter thus obtained to a scintillator; and III) detecting said scintillation photons via one or more photosensors. The invention also regards a thermal-neutron detector, characterized in that it is constituted by a single scintillator bar, deposited on one face of which either directly or via a purposely provided solid substrate is a neutron-converter material, said bar being coated with reflecting material and being coupled at the two ends to photosensors designed to detect the scintillation light produced by the particles that penetrate into the scintillator.

WO2013116241A1 provides a gamma-neutron detector based on mixtures of thermal neutron absorbers that produce heavy-particle emission following thermal capture. A B-10 based detector is used in a parallel electrode plate geometry that integrates neutron moderating sheets, such as polyethylene, on the back of the electrode plates to thermalize the neutrons and then detect them with high efficiency. The moderator can also be replaced with plastic scintillator sheets viewed with a large area photomultiplier tube to detect gamma-rays as well. The detector can be used in several scanning configurations including portal, drive-through, drive-by, handheld and backpack, etc.

### RELEVANT REFERENCES

### Patent Reference

Reference 1: WO 2008/132849 A1

### SUMMARY

A problem to be solved by embodiments is to provide a scintillator array to be used for a neutron detector capable of detecting high energy neutrons with high definition and high efficiency.

According to the present invention, the above object is achieved by a scintillator array according to claim 1. The dependent claims are directed to different advantageous aspects of the invention.

### BRIEF DESCRIPTION OF THE DRAWINGS

FIG. 1 is a view illustrating a structure example of a scintillator array;
FIG. 2 is an enlarged view of a part of the structure example of the scintillator array illustrated in FIG. 1;
FIG. 3 is a perspective view illustrating a structure example of a unit grid of a scintillator array;
FIG. 4 is a perspective view illustrating another structure example of the unit grid of the scintillator array;
FIG. 5 is a view illustrating another structure example of the scintillator array;
FIG. 6 is a view illustrating another structure example of the scintillator array;
FIG. 7 is a view illustrating another structure example of the scintillator array;
FIG. 8 is a view illustrating a structure example of a conventional scintillator array;
FIG. 9 is a view illustrating a structure example of the conventional scintillator array;
FIG. 10 is a chart illustrating a relationship between neutron energy and a neutron absorption cross section; and
FIG. 11 is a chart illustrating a relationship between a thickness and a transmittance of thermal neutrons.

### DETAILED DESCRIPTION

Hereinafter, a scintillator array to be used for a neutron detector of an embodiment will be described with reference to the drawings.

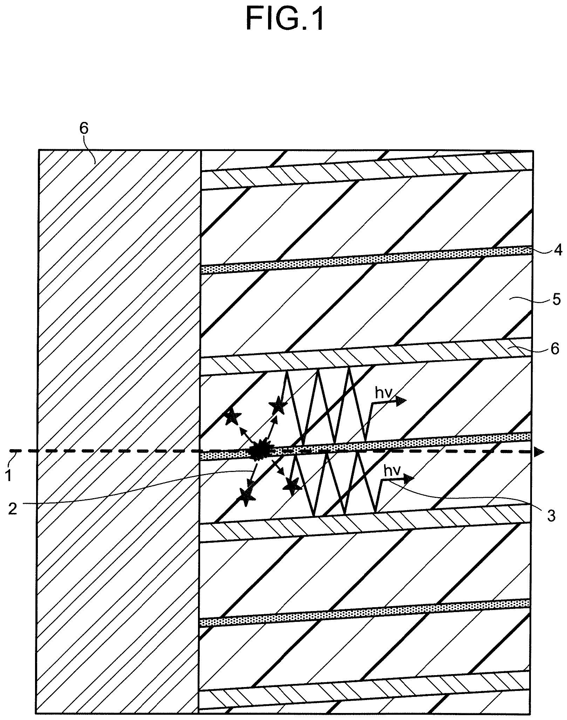

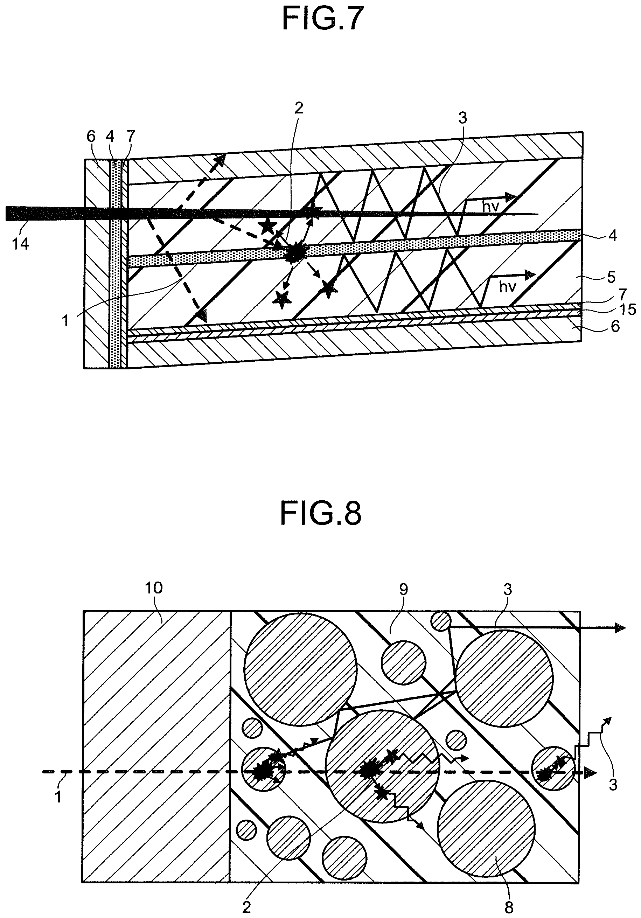

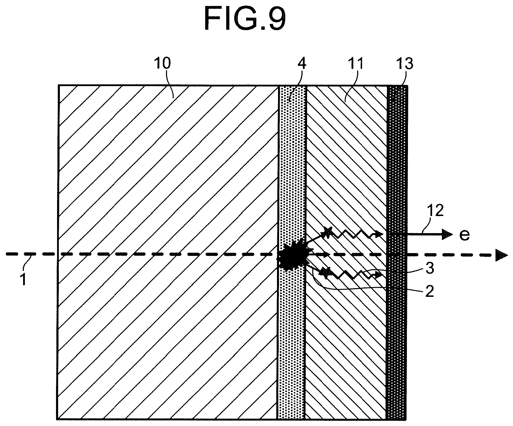

FIG. 1 is a view illustrating a structure example of a scintillator array to be used for a neutron detector according to the embodiment. FIG. 8 and FIG. 9 are views illustrating structure examples of scintillator arrays to be used for conventional neutron detectors.

The scintillator array illustrated in FIG. 8 has granular scintillators 8 (for example, LiF/ZnS phosphors). Generally, for the granular scintillators 8, a transparent binder 9 is used in order to fix the granular scintillators 8 to an aluminum substrate 10 composed of aluminum (a material which easily transmits neutrons) and in order to efficiently transmit light 3. The granular scintillators 8 are fixed to a surface of the aluminum substrate 10 by the binder 9.

A basic mechanism of neutron detection is as follows. A neutron (n) 1 is transmitted through the aluminum substrate 10 and reacts with Li of the granular scintillator 8. To be exact, Li is Li-6, and Li-6 and the neutron (n) 1 react with each other to emit an alpha (α) ray 2. This reaction is mentioned as (n, α). In response to the emitted alpha ray 2, a ZnS phosphor of the granular scintillator 8 emits the light 3.

The alpha rays 2 are emitted in all directions in the granular scintillator 8 and have a range (a flying distance of radiation rays) of about 5 µm to 10 µm. A particle size of the granular scintillator 8 is almost the same as the range of these alpha rays 2, and the lights 3 come out of the granular scintillator 8 while being absorbed and attenuated in the granular scintillator 8. The light 3 is transmitted in another granular scintillator 8 or is reflected by the granular scintillator 8, then transmitted in the binder 9, and comes out of the neutron detector. With regard to Li-6 atoms which react with neutrons, a proportion of the number of atoms LiF/ZnS in relation to the entire granular scintillator 8 is 1/4, and when considering the number of atoms of the binder 9, reaction efficiency in the whole body becomes poor.

In order to increase the efficiency, it is necessary to make a coated layer of the granular scintillator 8 thick. However, when the thickness is too large, the light 3 on a side on which the neutron 1 is incident is transmitted in the granular scintillator 8 and reflected by the granular scintillator 8, and further transmitted in the binder 9 and comes out of the neutron detector, so that a transmittance of lights is deteriorated, and further, since the light is diffused and transmitted, a resolution is reduced.

The scintillator of the above configuration which is used for actual imaging has a thickness of about several hundreds µm. A fast neutron, which has high neutron energy, is several digits smaller than a thermal neutron in reaction cross section with Li-6. Therefore, the thickness is required to be increased further in order to increase the reaction efficiency, so that the resolution becomes further worse.

As a method of increasing the resolution to obtain images with high luminance, a method illustrated in FIG. 9 is practically used. In this method, for a reactant with neutrons, B-10 (a thermal neutron cross section: 3838 barns) which is four times as large as Li-6 (a thermal neutron cross section: 940 barns) in thermal neutron cross section is used. Besides, a proportion of the number of atoms to react is also 4/5 in a reaction layer 4, and further, production is possible by vapor deposition without using a binder, and therefore a proportion of B-10 existing in a unit volume is also large, resulting in that the efficiency can be increased even if a thickness is small.

However, also in B-10, similarly to Li-6, a range of the alpha ray 2 emitted by a (n, α) reaction is about 4 to 5 µm, and therefore when the thickness exceeds 5 µm, the alpha ray 2 emitted on an incident side by a reaction with a neutron 1 cannot pass through the reaction layer 4 to reach a Csl phosphor 11. When the thickness of the reaction layer 4 is 5 µm, from a comprehensive viewpoint, about 80% of thermal neutrons is transmitted and only about 20% of the thermal neutrons is effectively utilized. However, an atom density per unit volume in a reaction surface is higher compared with a case of the configuration in FIG. 8 and the reaction film is about 5 µm, so that high-definition imaging is enabled.

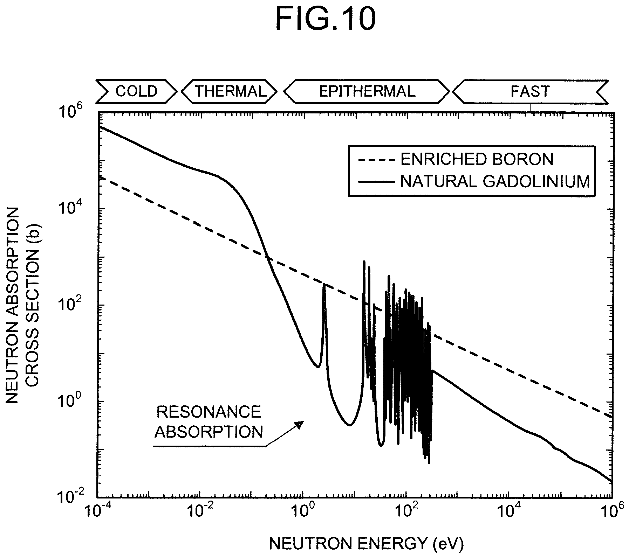

The acicular CsI phosphor 11 having high transparency emits the light 3 in response to the alpha ray 2, and the light 3 is converted into an electron 12 by a photoelectric conversion film 13. By a configuration to amplify the electron 12, efficiency of conversion and transmission is increased, so that it is possible to obtain sensitivity of about 100 or more times compared with a case of photographing by using an image sensor as in the configuration illustrated in FIG. 8. However, as illustrated in a chart of FIG. 10 having a vertical axis representing a neutron absorption cross section and a horizontal axis representing neutron energy, in a case of a high energy neutron (fast neutron), the neutron absorption cross section is two digits smaller compared with that of a thermal neutron, and therefore a rate of reaction becomes extremely low.

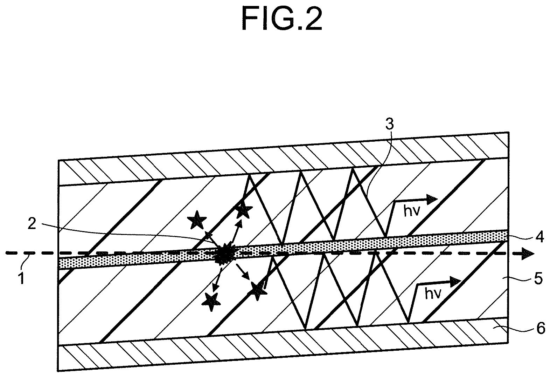

Next, a configuration of the scintillator array to be used for the neutron detector according to the embodiment will be described with reference to FIG. 1 and FIG. 2. FIG. 1 and FIG. 2 are cross-sectional schematic views illustrating structure examples of a detection section of the scintillator array to be used for the neutron detector according to the embodiment. As illustrated in FIG. 1 and FIG. 2, the scintillator array to be used for the neutron detector according to the embodiment has a reflection layer 6 positioned on an incident side of the neutron 1. Adjacent to this reflection layer 6 is constructed a multi-layer stacked structure in which each layer extends along an incident direction of the neutron 1.

In other words, the scintillator array of the embodiment has a stack provided with a reaction part having a reaction layer 4 emitting a radiation ray by a reaction with neutrons, a scintillator part having a scintillator layer 5 emitting light in response to the radiation ray, and a reflection part having a reflection layer 6 reflecting the light from the scintillator layer 5. The stack, while making the light from the scintillator part reflected by the reflection part, can make the light propagate inside the scintillator layer 5 to thereby lead out the light to the outside of the scintillator part.

A large number of the above-described stacked structures are stacked further, thereby constituting the detection section of the scintillator array to be used for the neutron detector. In this embodiment, in the above-described stacked structure, the respective layers such as the reaction film 4 extend along a direction inclined in relation to the incident direction of the neutron 1. In FIG. 1 and FIG. 2, in each layer such as the reaction layer 4, a rear end side (a right side in the drawings) is higher than a front end side (left side in the drawings).

The reaction layer 4 is constituted by using a vapor deposition film or the like which includes at least one of ¹⁰B₄C (a boron carbide containing enriched boron), B₄C, B, ¹⁰B, ⁶Li, Li, ⁶LiF, LiF, Li₂B₄O₇ and LiBO₃. A thickness of the reaction layer 4 (a length in an upper and lower direction in FIG. 1 and FIG. 2) is about 4 to 5 µm, for example. The reaction layer 4 reacts with the neutron 1 and emits a radiation ray (alpha ray 2). The reaction layer 4 may be formed on the reflection layer 6 by vapor deposition.

The scintillator layer 5 extends along the incident direction of the neutron 1 and includes the reaction layer 4 made to extend along the incident direction of the neutron inside the scintillator layer 5, for example. In other words, the scintillator part having the scintillator layer 5 sandwiches the reaction part having the reaction layer 4. The reaction layer 4 may be sandwiched by a plurality of scintillator layers 5.

The scintillator layer 5 is disposed adjacently to the reflection layer 6 in a manner to extend along the incident direction of the neutron 1, for example. A thickness (a length in the upper and lower direction in FIG. 1 and FIG. 2) of the scintillator layer 5 is 5 µm or more, for example, about several tens µm to 100 µm. The scintillator layer 5 emits the light 3 in response to the alpha ray 2 emitted in the reaction layer 4.

The scintillator layer 5 is constituted with any one kind of a single crystal scintillator, a plastic scintillator having a hydrogen atom, a glass scintillator sandwiched by a resin layer having a hydrogen atom, a polycrystalline scintillator, and a ceramic scintillator which includes a rare earth oxysulfide phosphor or garnet. The scintillator layer 5 may contain at least one kind selected from praseodymium, terbium, europium, cerium, zirconium, and phosphorus, as an activator.

The garnet may be constituted with a material represented by any one kind of a general formula Y₃Al₅O₁₂:Ce, a general formula (Y:Gd, Lu)₃(Al, Ga)₅O₁₂:Ce, a general formula (Y:Gd, Lu)₃(Al, Ga)₅O₁₂:Tb, and a general formula (Gd, Lu)₃(Al, Ga)₅O₁₂:Ce, for example. Further, the single crystal scintillator may be constituted with a material represented by a general formula Gd₂SiO₅:Ce, a general formula Bi₄Ce₃O₁₂, or a general formula Lu₂SiO₅:Ce.

The reflection layer 6 extends in the surroundings of the scintillator layer 5 which includes the reaction layer 4 made to extend along the incident direction of the neutron inside the scintillator layer 5. A thickness (a length in the upper and lower direction in FIG. 1 and FIG. 2) of the reflection layer 6 is preferable to be 5 µm or more. The reflection layer 6 extends along the incident direction of the neutron 1 and reflects light.

The reflection layer 6 includes at least one of aluminum, a white ceramic such as AlN (aluminum nitride), silicon, white polyethylene terephthalate (PET), and a reflection coating material, for example.

In the embodiment, this multi-layer stacked structure is formed by repeatedly stacking numerous (for example, several hundreds to several thousands) stacks composed of the reaction layer 4, the scintillator layer 5 and the reflection layer 6 as described above. In this multi-layer stacked structure, the stacks may be disposed alternately in a lattice shape (grid shape) when viewed from an incident surface side of the neutron 1, in a manner that stacking directions differ by 90°. The above constitutes the detection section (two-dimensional neutron reaction scintillator) of the scintillator array to be used for the neutron detector having a neutron incident surface spreading two-dimensionally.

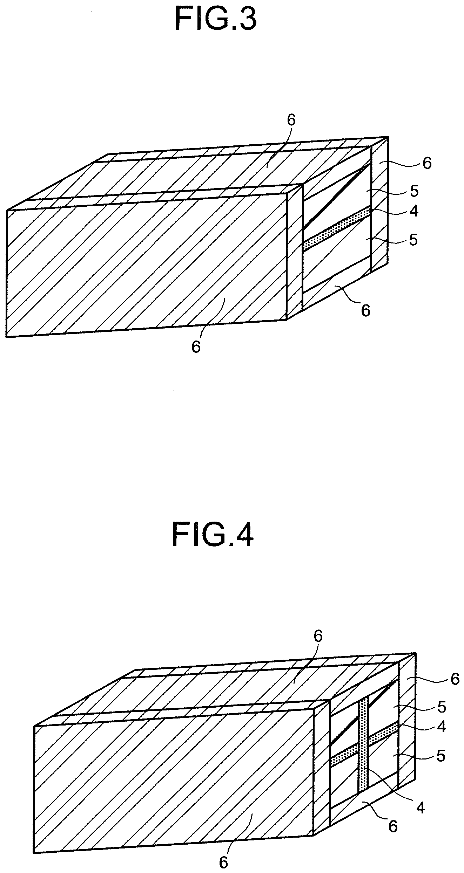

When the unit grid is illustrated by a perspective view, the scintillator array may have a configuration (FIG. 3) in which the reaction layer 4 which extends along the incident direction of the neutron and is included inside the scintillator layer 5 extends in a plane bisecting a thickness of a plane of the scintillator layer 5 which faces a pair of facing planes of the reflection layers 6, in parallel to the pair of facing planes of the reflection layers 6 extending in the surroundings of the scintillator layer 5, in the unit grid surrounded by the reflection layers 6. In a case where the configuration illustrated in FIG. 3 is provided, the reaction part having the reaction layer 4 divides the scintillator part having the scintillator layer 5 by extending along a first direction which is parallel to the incident direction of the neutron or inclines in relation to the incident direction of the neutron and along a second direction intersecting the first direction. Further, the plural reflection layers 6 surround the scintillator part.

The scintillator array may have a configuration (FIG. 4) in which the reaction layers 4 which extend along the incident direction of the neutrons inside the scintillator layer 5 extend in planes bisecting each thickness of respective planes of the scintillator layer 5 which face two pairs of facing planes of the reflection layer 6, in parallel to each of the two pairs of facing planes of the reflection layers 6 extending in the surroundings of the scintillator layer 5. In a case where the configuration illustrated in FIG. 4 is provided, the reaction part having the reaction layers 4 includes a first reaction part which divides the scintillator part having the scintillator layer 5 by extending along the above-described first direction and the above-described second direction, and a second reaction part which divides the scintillator part having the scintillator layer 5 by extending along the above-described first direction and along a third direction intersecting the above-described first direction and intersecting the above-described second direction. Further, the plural reflection layers 6 surround the scintillator part.

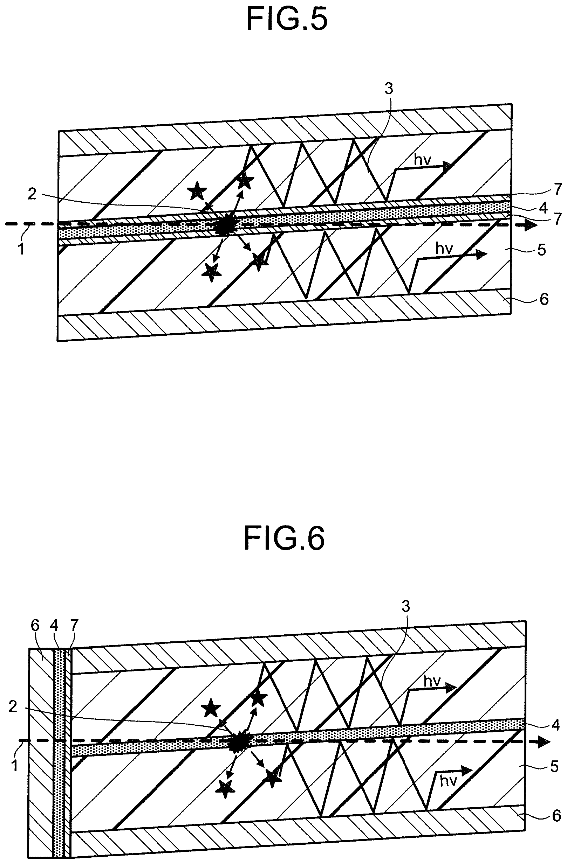

Since the reaction layer 4 has a low light reflectance in a case of a black color, the light 3 generated in the scintillator layer 5 is hard to be carried efficiently if the reaction layer 4 and the scintillator layer 5 are directly stacked. Thus, in another embodiment, by a sandwich structure in which the reaction layer 4 is sandwiched by the vapor deposition films 7 as in FIG. 5, the vapor deposition films 7 work as reflection films reflecting light, enabling efficient carrying of the light 3 generated in the scintillator layer 5 by using reflection by the vapor deposition films 7, so that the light 3 can be taken outside. The vapor deposition film 7 has a thickness (a length in the upper and lower direction in FIG. 1 and FIG. 2) of about 0.1 µm to 0.5 µm, and is formed in an interface between the reaction layer 4 and the scintillator layer 5 by vapor deposition. The vapor deposition film 7 is preferable to have a vapor deposition film of any one kind of aluminum, magnesium, a gadolinium oxide (Gd₂O₃), a white ceramic, and silicon.

As described above, in the scintillator array to be used for the neutron detector of this embodiment, the scintillator layer 5 which includes the reaction layer 4 extending thereinside is configured to be sandwiched by the reflection layers 6. In response to the alpha ray 2 emitted by the (n, α) reaction at each point of the reaction layer 4, a component discharged in almost a perpendicular direction (in a thickness direction of 4 to 5 µm) in relation to the neutron 1 is emitted as the light 3 by the scintillator layer 5. The light 3 proceeds in the highly transparent scintillator layer 5 while being reflected by the reflection layers 6, and can be taken outside.

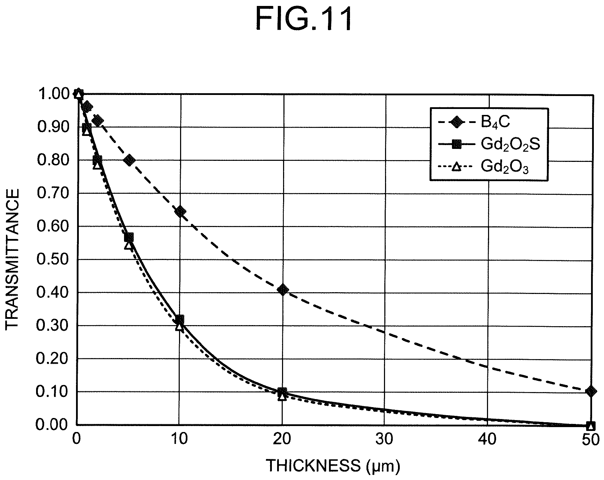

FIG. 11 is a chart illustrating a relationship between a thickness of a reaction material and a transmittance of thermal neutrons, with a vertical axis representing a transmittance and a horizontal axis representing a thickness. As illustrated in FIG. 11, in a case of ¹⁰B₄, about 90% of the thermal neutrons react when the thickness is 50 µm. Therefore, adjusting a length (a length in a right and left direction in FIG. 1 and FIG. 2) of the reaction layer 4 to be about 50 µm enables the reaction with about 90% of the thermal neutrons.

The reflection layer 6 with a thickness of 5 µm or more absorbs the alpha rays 2 coming out in the upper and lower direction in the reaction layer 4 in FIG. 1 and FIG. 2 and hinders light emission in the scintillator layers 5 on upper and lower sides separated by the reflection layers 6. Thereby, a position resolution is improved.

In this embodiment, the reaction layer 4 is formed in a manner to extend along the incident direction of the neutron 1 as described above. Then, since the neutron 1 proceeds not perpendicularly to but nearly horizontally to this reaction layer 4, and in a manner to move on a diagonal line in the inclinedly disposed reaction layer 4, the reaction efficiency can be greatly improved.

As described above, the scintillator array to be used for the neutron detector according to this embodiment makes it possible to greatly improve use efficiency of neutrons and to perform propagation of the light efficiently without diffusing the light. This makes it possible to obtain the scintillator array to be used for the neutron detector which detects the neutrons efficiently and is capable of imaging with high definition.

Next, a scintillator array of another embodiment will be described with reference to FIG. 6. The scintillator array of this embodiment has a reflection layer 6 having a thickness of 5 µm or more, a reaction layer 4, and a vapor deposition film 7 with a thickness of about 0.1 µm to 0.5 µm in a manner to extend along a neutron incident surface (for example, a side surface of a stack) on a neutron incident side (a left side in FIG. 6). To explanation of the reflection layer 6, the reaction layer 4, and the vapor deposition film 7, the explanation of the above-described reflection layer 6, reaction layer 4, and vapor deposition film 7 can be appropriately employed. Further, the same reference sign is given to the same portion as that in the embodiment illustrated in FIG. 1 and FIG. 2, and redundant description is omitted.

The scintillator array to be used for the neutron detector of the embodiment illustrated in FIG. 6 makes it possible to increase reaction efficiency with a neutron 1 in a neutron input surface in addition to actions and effects in the scintillator illustrated in FIG. 2. This makes it possible to make a size in a direction (a right and left direction in FIG. 6) in which neutrons in the neutron detector are transmitted short and compact.

Next, a scintillator array to be used for a neutron detector according to an embodiment which is suitable for measurement of fast neutrons will be described with reference to FIG. 7. In the scintillator array to be used for the neutron detector of this embodiment, in a case of a plastic scintillator, a glass scintillator not containing hydrogen, a crystal scintillator, or a ceramic scintillator such as a rare earth oxysulfide phosphor or garnet, it is configured such that a scintillator covered by a resin containing hydrogen, or the like, is used for a scintillator layer 5, a vapor deposition film 15 (5 µm or more in thickness) for absorbing thermal neutrons is provided between the scintillator layer 5 and a reflection layer 6, the vapor deposition film 15 acting as an absorption film absorbing the thermal neutrons, and a vapor deposition film 7 is formed between the vapor deposition film 15 and the scintillator layer 5 for reflecting light. The vapor deposition film 15 includes a gadolinium oxide (Gd₂O₃), for example.

The scintillator array illustrated in FIG. 7 has, on an incident side (left side in FIG. 7) of a first neutron 14, a reflection layer 6 of a thickness of 5 µm or more, a reaction layer 4, and a vapor deposition film 7 of a thickness of about 0.1 µm to 0.5 µm for reflection of light in a manner to extend along an incident surface of the fast neutron 14. Since the other portions are configured similarly to the embodiment illustrated in FIG. 1 and FIG. 2, the same reference sign is given to the corresponding portion and redundant description is omitted.

In the scintillator array illustrated in FIG. 7, the fast neutron 14 being a neutron of a high-energy component reacts in the reaction layer 4, the reaction layer 4 emits an alpha ray 2, the alpha ray 2 reacts in the scintillator layer 5, and the scintillator layer 5 emits light 3. However, in a (n, α) reaction in the reaction layer 4, when energy of neutrons increases, an absorption cross section declines in the order of digits as indicated by a line of a neutron absorption cross section of enriched boron illustrated in the chart of FIG. 10 which has a vertical axis representing a neutron absorption cross section and a horizontal axis representing neutron energy. In other words, a reaction probability (efficiency) becomes low. Therefore, it becomes necessary to make a length (a length in a right and left direction in FIG. 7) of the reaction layer 4 longer than that in a case of a thermal neutron by the order of digits.

In this embodiment, by focusing on hydrogen which scatters at an almost constant rate particularly to the neutron energy in a reaction with neutrons, the fast neutron 14 is slowed down by hydrogen or the like by using the scintillator 5. The neutrons 1 generated as a result of slow-down of the fast neutrons 14 are diffused in an isotropic direction from the scintillator layer 5. The neutron 1 reacts in the reaction layer 4, the alpha ray 2 is emitted, and this alpha ray 2 reacts with the scintillator layer 5 to generate light 3.

If the neutron 1 slowed down from the fast neutron 14 reacts in the reaction film 4 on an upper side of the scintillator layer 5, emission occurs in the upper and lower scintillator layer 5 to emit the light 3, resulting in the poor resolution. Thus, by providing the vapor deposition film 15 which includes gadolinium (Gd) having a large absorption cross section in a thermal neutron region on the reflection layer 6 so that the reaction with the reaction layer 4 on the upper side of the scintillator layer 5 does not occur, a wraparound of the neutrons on the lower side can be prevented.

As described above, in the embodiment of the example of FIG. 7, particularly in the case of the high energy neutron, a reaction distance with the reaction layer 4 is long, and thus the neutron 1 generated as a result that the fast neutron 14 is slowed down by a hydrogen atom of the scintillator layer 5 is made to react with the reaction layer 4. The range of the neutron 1 is several centimeters or more and diffusion occurs, and thus, by forming the vapor deposition film 15 (whose thickness is 5 µm to several tens µm) on one side (lower side in FIG. 7) of the reflection layer 6, the neutrons 1 slowed down from the fast neutrons 14 which are diffused are absorbed. This makes it possible to improve the resolution of the detector while increasing the detection efficiency. In an interface between the vapor deposition film 15 and the scintillator layer 5, the vapor deposition film 7 is formed for reflection of light.

While certain embodiments of the present invention have been described, these embodiments have been presented by way of example only, and are not intended to limit the scope of the invention. Indeed, the novel embodiments described herein may be embodied in a variety of other forms; furthermore, various omissions, substitutions and changes in the form of the embodiments described herein may be made without departing from the scope of the invention as defined by the appended claims.

## Claims

1. A scintillator array comprising
a stack, including a unit grid, including:
a reaction part (4) extending along one direction, being configured to emit radiation by a reaction with neutrons, and having a thickness of 4 to 5 µm;
a scintillator part extending along the one direction, sandwiching the reaction part (4) so as to define a first scintillator layer (5) on a first side of the reaction part (4) and a second scintillator layer (5) on a second side of the reaction part (4), being configured to emit light in each of the first scintillator layer and the second scintillator layer
in response to the radiation coming out in a direction of the first side and a direction of the second side of the reaction part (4), and each of the first and second scintillator layers have a thickness of 5 to 100 µm; and the stack further including:
a reflection part (6) extending along the one direction, being configured to reflect the light, and having a thickness of 5 µm or more,
wherein the reaction part (4) includes at least one selected from the group consisting of ¹⁰B₄C, B₄C, B, ¹⁰B, ⁶Li, Li, ⁶LiF, LiF, Li₂B₄O₇ and LiBO₃,
wherein the scintillator part includes at least one selected from the group consisting of:
a single crystal scintillator represented by a general formula Gd₂SiO₅:Ce, a general formula Bi₄Ce₃O₁₂, or a general formula Lu₂SiO₅:Ce;
a plastic scintillator having a hydrogen atom;
a glass scintillator sandwiched by a resin layer having a hydrogen atom;
a polycrystalline scintillator; and
a ceramic scintillator having a rare earth oxysulfide phosphor or a garnet, the garnet being represented by a general formula Y₃Al₅O₁₂:Ce, a general formula (Y:Gd,Lu)₃(Al,Ga)₅O₁₂:Ce, a general formula (Y:Gd,Lu)₃(Al,Ga)₅O₁₂:Tb, or a general formula (Gd,Lu)₃(Al,Ga)₅O₁₂:Ce,
wherein the reflection part (6) includes at least one selected from the group consisting of aluminum, a white ceramic, silicon, white polyethylene terephthalate, and a reflection coating material,
wherein the reflection part (6) surrounds the reaction part (4) and the scintillator part sandwiching the reaction part (4) in the unit grid, and
wherein the stack is configured to reflect the light on the reflection part and thus propagate the reflected light inside the scintillator part to an outside of the scintillator part.

2. The scintillator array according to claim 1,
wherein the reaction part (4) extends along the one direction and a second direction intersecting the one direction to divide the scintillator part.

3. The scintillator array according to claim 1,
wherein the one direction is inclined to an incident direction of the neutron.

4. The scintillator array according to claim 1,
wherein the scintillator part (5) further includes at least one selected from the group consisting of praseodymium, terbium, europium, cerium, zirconium, and phosphorus.

5. The scintillator array according to claim 1,
wherein the stack further includes
a reflection film provided between the reaction part (4) and the scintillator part, includes at least one selected from the group consisting of aluminum, magnesium, a gadolinium oxide, a white ceramic and silicon, and configured to reflect the light.

6. The scintillator array according to claim 1,
wherein the stack further includes
an absorption film (15) which is provided between the scintillator part and the reflection part and absorbs a thermal neutron.

7. The scintillator array according to claim 6,
wherein the absorption film (15) includes a gadolinium oxide.

8. The scintillator array according to claim 1, further comprising:
a refection layer (6) provided along a side surface of the stack and configured to transmit the neutrons and reflect the light, and
a reaction layer (4) provided between the reflection layer and the side surface of the stack and configured to emit the radiation by a reaction with the neutron.

## Patentansprüche

1. Eine Scintillator-Anordnung, umfassend
einen Stapel, mit einem Einheitsgitter, umfassend:
einen Reaktionsteil (4), das sich entlang einer Richtung erstreckt, konfiguriert ist, um durch eine Reaktion mit Neutronen Strahlung zu emittieren, und eine Dicke von 4 bis 5 µm aufweist;
ein Szintillatorteil, das sich entlang der einen Richtung erstreckt und das Reaktionsteil (4) einschließt, um eine erste Szintillatorschicht (5) auf einer ersten Seite des Reaktionsteils (4) und eine zweite Szintillatorschicht (5) auf einer zweiten Seite des Reaktionsteils (4) festzulegen, das konfiguriert ist, um Licht in jeder der ersten Szintillatorschicht (5) und der zweiten Szintillatorschicht (5) in Reaktion auf die Strahlung, die in einer Richtung der ersten Seite und einer Richtung der zweiten Seite des Reaktionsteils (4) austritt, Licht zu emittieren, und jede der ersten und zweiten Szintillatorschichten eine Dicke von 5 bis 100 µm aufweist; und
ein Reflexionsteil (6), das sich entlang der einen Richtung erstreckt, konfiguriert ist, um das Licht zu reflektieren, und eine Dicke von 5 µm oder mehr aufweist,
wobei das Reaktionsteil (4) mindestens eines umfasst, das aus der Gruppe ausgewählt ist, die aus ¹⁰B₄C, B₄C, B, ¹⁰B, ⁶Li, Li, ⁶LiF, LiF, Li₂B₄O₇ und LiBO ₃besteht,
wobei der Szintillatorteil mindestens einen umfasst, der aus der Gruppe ausgewählt ist, bestehend aus:
einem einzelnen Kristallszintillator, dargestellt durch eine allgemeine Formel Gd₂SiO₅:Ce, eine allgemeine Formel Bi₄Ce₃O₁₂ oder eine allgemeine Formel Lu₂SiO₅:Ce;
einem Kunststoffszintillator mit einem Wasserstoffatom;
einem Glasszintillator, der von einer Harzschicht mit einem Wasserstoffatom geschichtet ist;
einem polykristallinen Szintillator; und
einem keramischen Szintillator mit einem Seltenerdoxysulfid-Leuchtstoff oder einem Granat, wobei das Granat durch eine allgemeine Formel Y₃Al₅O₁₂:Ce, eine allgemeine Formel (Y:Gd,Lu)₃(Al,Ga)₅O₁₂:Ce, einer allgemeinen Formel (Y:Gd,Lu)₃(Al,Ga)₅O₁₂:Tb oder einer allgemeinen Formel (Gd,Lu)₃(Al,Ga)₅O₁₂:Ce,
wobei das Reflexionsteil (6) mindestens eines umfasst, das aus der Gruppe ausgewählt ist, die aus Aluminium, einer weißen Keramik, Silizium, weißem Polyethylenterephthalat und einem Reflexionsbeschichtungsmaterial besteht,
wobei das Reflexionsteil (6) das Reaktionsteil (4) und das Szintillatorteil umgibt, das das Reaktionsteil (4) in dem Einheitsgitter einschließt, und
wobei der Stapel konfiguriert ist, um das Licht auf dem Reflexionsteil zu reflektieren und somit das reflektierte Licht innerhalb des Szintillatorteils zu einer Außenseite des Szintillatorteils zu leiten.

2. Scintillator-Anordnung gemäß Anspruch 1,
wobei sich das Reaktionsteil (4) entlang der einen Richtung und einer zweiten Richtung erstreckt, die die eine Richtung schneidet, um den Scintillatorteil zu unterteilen.

3. Scintillator-Anordnung gemäß Anspruch 1,
wobei die eine Richtung zu einer Einfallsrichtung des Neutrons geneigt ist.

4. Scintillator-Anordnung gemäß Anspruch 1,
wobei der Scintillator-Teil (5) ferner mindestens ein Element umfasst, das aus der Gruppe ausgewählt ist, die aus Praseodym, Terbium, Europium, Cer, Zirkonium und Phosphor besteht.

5. Scintillator-Anordnung gemäß Anspruch 1,
wobei der Stapel ferner einen Reflexionsfilm umfasst, der zwischen dem Reaktionsteil (4) und dem Scintillatorteil bereitgestellt ist, mindestens eines umfasst, das aus der Gruppe ausgewählt ist, die aus Aluminium, Magnesium, einem Gadoliniumoxid, einer weißen Keramik und Silizium besteht, und so konfiguriert ist, dass es das Licht reflektiert.

6. Scintillator-Anordnung gemäß Anspruch 1,
wobei der Stapel ferner einen Absorptionsfilm (15) umfasst, der zwischen dem Scintillator-Teil und dem Reflexionsteil vorgesehen ist und ein thermisches Neutron absorbiert.

7. Scintillator-Anordnung gemäß Anspruch 6,
wobei der Absorptionsfilm (15) ein Gadoliniumoxid umfasst.

8. Scintillator-Anordnung gemäß Anspruch 1, ferner mit:
einer Reflexionsschicht (6), die entlang einer Seitenfläche des Stapels vorgesehen ist und so konfiguriert ist, dass sie Neutronen durchlässt und Licht reflektiert, und
einer Reaktionsschicht (4), die zwischen der Reflexionsschicht und der Seitenfläche des Stapels vorgesehen ist und so konfiguriert ist, dass sie durch eine Reaktion mit dem Neutron Strahlung emittiert.

## Revendications

1. Réseau de scintillateurs comprenant
un empilement, comprenant une grille unitaire, comprenant :
une partie réaction (4) s'étendant le long d'une direction, qui est conçue pour émettre un rayonnement par une réaction avec des neutrons, et ayant une épaisseur de 4 à 5 µm ;
une partie scintillateur s'étendant le long de la une direction, prenant en sandwich la partie réaction (4) de manière à définir une première couche de scintillateur (5) sur un premier côté de la partie réaction (4) et une deuxième couche de scintillateur (5) sur un deuxième côté de la partie réaction (4), qui est conçue pour émettre de la lumière dans chacune des première couche de scintillateur et deuxième couche de scintillateur en réponse au rayonnement sortant dans une direction du premier côté et une direction du deuxième côté de la partie réaction (4), et chacune des première et deuxième couches de scintillateur ayant une épaisseur de 5 à 100 µm ; et l'empilement comprenant en outre :
une partie réflexion (6) s'étendant le long de la une direction, qui est conçue pour réfléchir la lumière, et ayant une épaisseur de 5 µm ou plus,
dans lequel la partie réaction (4) comprend au moins un élément choisi dans le groupe constitué de ¹⁰B₄C, B₄C, B, ¹⁰B, ⁶Li, Li, ⁶LiF, LiF, Li₂B₄O₇ et LiBO₃,
dans lequel la partie scintillateur comprend au moins un élément choisi dans le groupe constitué de :
un scintillateur monocristallin représenté par une formule générale Gd₂SiO₅:Ce, une formule générale Bi₄Ce₃O₁₂, ou une formule générale Lu₂SiO₅:Ce ;
un scintillateur en plastique ayant un atome d'hydrogène ;
un scintillateur en verre pris en sandwich par une couche de résine ayant un atome d'hydrogène ;
un scintillateur polycristallin ; et
un scintillateur en céramique ayant un phosphore d'oxysulfure de terre rare ou un grenat, le grenat étant représenté par une formule générale Y₃Al₅O₁₂:Ce, une formule générale (Y:Gd,Lu)₃(Al,Ga)₅O₁₂:Ce, une formule générale (Y:Gd,Lu)₃(Al,Ga)₅O₁₂:Tb, ou une formule générale (Gd,Lu)₃(Al,Ga)₅O₁₂:Ce,
dans lequel la partie réflexion (6) comprend au moins un élément choisi dans le groupe constitué de l'aluminium, d'une céramique blanche, du silicium, du polyéthylène téréphtalate blanc, et d'un matériau de revêtement réfléchissant,
dans lequel la partie réflexion (6) entoure la partie réaction (4) et la partie scintillateur prenant en sandwich la partie réaction (4) dans la grille unitaire, et
dans lequel l'empilement est conçu pour réfléchir la lumière sur la partie réflexion et ainsi propager la lumière réfléchie à l'intérieur de la partie scintillateur vers un extérieur de la partie scintillateur.

2. Réseau de scintillateurs selon la revendication 1,
dans lequel la partie réaction (4) s'étend le long de la une direction et d'une deuxième direction croisant la une direction pour diviser la partie scintillateur.

3. Réseau de scintillateurs selon la revendication 1,
dans lequel la une direction est inclinée vers une direction incidente du neutron.

4. Réseau de scintillateurs selon la revendication 1,
dans lequel la partie scintillateur (5) comprend en outre au moins un élément choisi dans le groupe constitué du praséodyme, du terbium, de l'europium, du cérium, du zirconium et du phosphore.

5. Réseau de scintillateurs selon la revendication 1,
dans lequel l'empilement comprend en outre
un film réfléchissant fourni entre la partie réaction (4) et la partie scintillateur, comprend au moins un élément choisi dans le groupe constitué de l'aluminium, du magnésium, d'un oxyde de gadolinium, d'une céramique blanche et du silicium et conçu pour réfléchir la lumière.

6. Réseau de scintillateurs selon la revendication 1,
dans lequel l'empilement comprend en outre
un film d'absorption (15) qui est fourni entre la partie scintillateur et la partie réflexion et absorbe un neutron thermique.

7. Réseau de scintillateurs selon la revendication 6,
dans lequel le film d'absorption (15) comprend un oxyde de gadolinium.

8. Réseau de scintillateurs selon la revendication 1, comprenant en outre :
une couche de réflexion (6) fournie le long d'une surface latérale de l'empilement et conçue pour transmettre les neutrons et réfléchir la lumière, et
une couche de réaction (4) fournie entre la couche de réflexion et la surface latérale de l'empilement et conçue pour émettre le rayonnement par une réaction avec le neutron.
